(19) Europäisches Patentamt
European Patent Office
Office européen des brevets

(11) Publication number : **0 503 783 A2**

(12) **EUROPEAN PATENT APPLICATION**

(21) Application number : **92301414.6**

(51) Int. Cl.$^5$ : **B29C 47/00,** B29C 67/20

(22) Date of filing : **20.02.92**

(30) Priority : **11.03.91 GB 9105049**
**04.09.91 GB 9118891**

(43) Date of publication of application :
**16.09.92 Bulletin 92/38**

(84) Designated Contracting States :
**AT BE CH DE DK ES FR GB GR IT LI LU NL SE**

(71) Applicant : **IMPERIAL CHEMICAL INDUSTRIES PLC**
**Imperial Chemical House, Millbank**
**London SW1P 3JF (GB)**

(72) Inventor : **Birch, Robin David**
**19 Paul's Rise, Woodchester**
**Stroud, Gloucester (GB)**

(74) Representative : **Draggett, Peter Thornton et al**
**Imperial Chemical Industries PLC, Legal Department: Patents, PO Box 6, Bessemer Road**
**Welwyn Garden City Herts AL7 1HD (GB)**

(54) **Extruded porous structure.**

(57) A porous thermoplastic membrane structure having, in the absence of an external skin, a generally uniform porosity, such membrane structure being capable of withstanding a minimum burst pressure in excess of 5 bars.

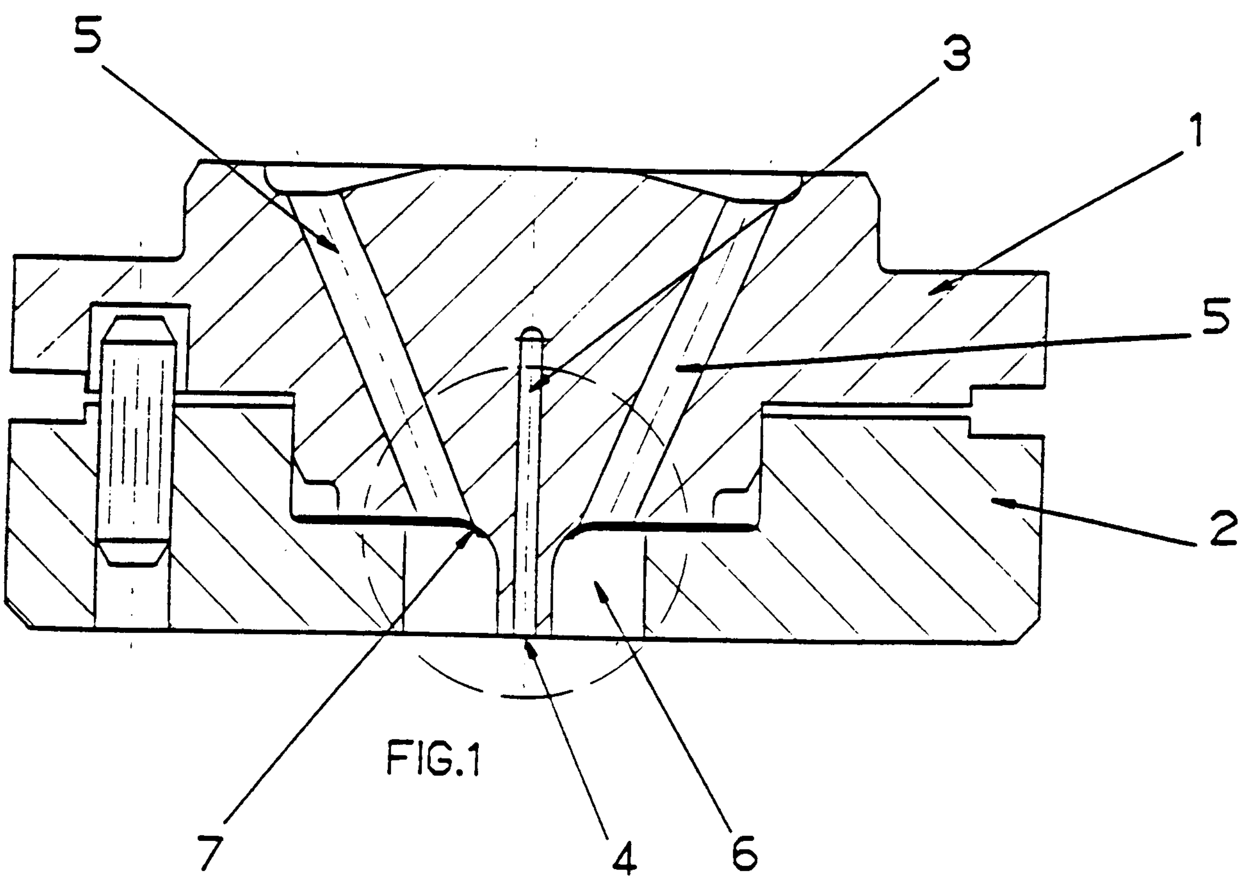


FIG.1

EP 0 503 783 A2

Jouve, 18, rue Saint-Denis, 75001 PARIS

This invention relates to an extruded structure and more particularly to such a structure having high porosity. The structure may be tubular or it may have a rectangular or other cross section.

European Patent Application No 88301982 (Imperial Chemical Industries PLC) is concerned with a method of producing a low density, porous, film or tape by melt spinning a blend of a thermoplastic polymer and another thermoplastic polymer into a film or tape and then leaching away the other polymer using a suitable solvent. The film produced, being highly porous, may be used for a variety of end uses including a filtration or separation medium.

United States Patent Serial No 4,755,540 (Raychem Limited) describes a method of making a polyaryletherketone porous membrane, comprising the steps of:

(a) providing a mixture of a first polymeric material, which is a polyaryletherketone, and a second polymeric material, which is partially incompatible with said first polymeric material;

(b) forming said mixture into a film; and

(c) extracting from said film at least a substantial portion of said second polymeric material by means of a liquid which does not dissolve said first polymeric material.

European Patent Specification 0164235 (Imperial Chemical Industries PLC) describes a melt spun tube having two polymeric fibrous components and containing to from 30 to 70 parts by weight of a first component and from 70 to 30 parts by weight of a second component, each component being present in the tube wall as fibrils which are substantially aligned to the axis of the tube, the aligned fibrils being interconnected to each other in a random manner, the interconnections penetrating through the fibrils of the other component such that both components exist in the tube wall as interpenetrating networks. A feature of the tube is that one of the two interpenetrating networks forming the tube wall can be leached out of the tube wall by a suitable solvent so producing a highly porous tube having a wall comprising the other polymer network. Such a porous tube can be used to advantage in the construction of a membrane.

When the above described porous structures are to be used as membranes then they are required to have a sufficiently high strength to withstand liquid or gaseous pressures applied across the structures. In United States Patent Serial No 4,755,540 mention is made that lack of strength may be compensated for by the membrane carrying reinforcing fibres eg. a web or net of polymer and/or by laminating together two or more such membranes having a directionally oriented lack of strength with their low-strength directions differently aligned or by heat sealing the membrane, preferably in an open grid pattern, to provide strengthened seal lines with interspersed areas of unsealed membrane having the original porosity and performance characteristics.

No provision is made in any of the other structures described above to improve the burst strength thereof. The lack of high burst strength in the porous tubes made according to the teaching of European Patent Specification 0164235 is very apparent.

This is particularly so when the two polymeric components used have a high viscosity, for example when one polymeric component is polyetheretherketone and the other polymeric component is polyethersulphone, which prevents the flow lines of the blended polymers entering the extruder die from being intimately mixed so resulting in structural weaknesses in the extruded tube.

European Patent Application 90311802.4 (Imperial Chemical Industries PLC) is concerned with an extruded porous structure comprising at least one area of lower porosity extending throughout the length of the structure and at least one area of high porosity extending throughout the length of the structure. The denser regions which extend the length of the structure serve to strengthen the porous structure. Even so such strengthened structures can only withstand burst pressures up to 5 bars which imposes severe limitations when it is required to use the structure as a membrane.

According to the present invention we provide a porous thermoplastic membrane structure having, in the absence of an external skin, a generally uniform porosity, such membrane structure being capable of withstanding a minimum burst pressure in excess of 5 and more preferably in excess of 8 bars.

The term "burst pressure" is used herein to mean the difference in pressure which the membrane can withstand across the structure, ie. between its major surfaces, without at least partial disintegration of the product occurring. In the case of a flat, film-like, structure this will be the pressure differential which the structure can withstand between its major flat surfaces. In the case of a tube it will be the pressure differential between the interior and exterior of the tube. The methods by which burst pressure can be determined will be discussed later.

The porous structures described in European Patent Application 90311802.4 are produced by a method in which a blend of a first thermoplastic polymer and a second, immiscible, thermoplastic polymer is extruded through a die to form a structure having the desired cross section in which the polymers are present in the structure as interpenetrating networks and leaching out with a solvent for the immiscible polymer that network formed by the immiscible polymer so producing a porous structure comprising the first polymer network characterised in that a perforate barrier plate in the form of either a perforated solid plate or a mesh or gauze is interposed

in the flow path of the blend prior to its passage out of the die. The interposition of such a barrier plate in the flow path of a blend of two polymers of differing melt viscosities causes those areas of the extrusion on the downstream side of the solid regions of the barrier plate to have a predominance of the higher melt viscosity component in the blend, such areas having a denser structure, ie a lower porosity, than the remaining areas of the extrusion.

We have now found that the invention structures can be produced by being extruded in a modification of the method described in European Patent Application 90311802.4. More particularly if a much finer gauze than that exemplified in European Patent Application 90311802.4 is used then the invention structures are produced rather than the structures forming the subject of European Patent Application 90311802.4.

According to the method of the invention we provide a method of producing a porous structure in which a blend of a first thermoplastic polymer and a second thermoplastic polymer immiscible therewith is extruded through a die to form a structure having the desired cross section in which the polymers are present in the structure as interpenetrating networks and leaching out with a solvent for the immiscible polymer that network formed by the immiscible polymer so producing a porous structure comprising the first polymer network characterised in that a fine gauze, as herein defined, is interposed in the flow path of the blend before it enters the die.

The 'fine gauze' is a perforated structure such that sufficient shear is generated in the polymer blend to cause the polymer blend to form into an interpenetrating network as it passes through the structure. The specific structures suitable for the fine gauze will depend greatly on the processed polymer blend, and the perforations may be irregularly disposed in the fine gauze structure, although regular perforations are favoured. For most processed polymer blends a structure with an area % of perforations corresponding to a perforated structure of 80 to 500 mesh, preferably 125 to 300 mesh, eg 200 mesh will be suitable, although other structures are not excluded.

Hitherto we believed that the formation of an interpenetrating network when spinning a blend of two thermoplastic polymers was highly dependent on the shear imparted to the polymer blend as it passed through the die orifice (see in particular European Patent Publication No 283187 A2).

We have now realised that the formation of an interpenetrating network can be achieved merely by interposing a fine gauze in the blend flow path before it enters the die orifice. This provides a considerable advantage. In the spinning of structures having an interpenetrating network, the shear rate through the gap in the die is a function of the gap width. Previously, therefore, and in order to achieve the necessarily high shear rates, there have been serious upper limits on the gaps which could be used ie limits on the product thicknesses which could be produced. We now find that with the method of the invention, as the interpenetrating network is formed before the blend enters the die, we are not faced with the same limitations on die gap as previously. Accordingly the method of the invention can be used to produce porous structures of much greater thickness, including tubes having much greater wall thickness than hitherto.

Further advantages of the improved method are that (1) it offers scope for the production of structures having shapes which were not possible hitherto, (2) lower spinning pack pressures can be used, and (3) in the case of tubular structures it is easier to centre the die.

The invention also includes an apparatus for producing an extruded structure from a polymer blend, including a bridge plate and a die plate, means for attaching the bridge plate and die plate together, means for supplying a polymer blend through a number of conduits located in the bridge plate to a die located in the die plate, characterised in that a fine gauze, as herein defined, is interposed between the outlets from the polymer blend supply conduits and the die.

When the apparatus is to be used to produce a tubular structure then the apparatus will also include a conduit passing through the bridge plate for supplying an inert gas to a location centrally of the die.

As examples of polymers of which the membrane may be made are inter alia polymers and copolymers of the general formulae I-VII.

PEEK 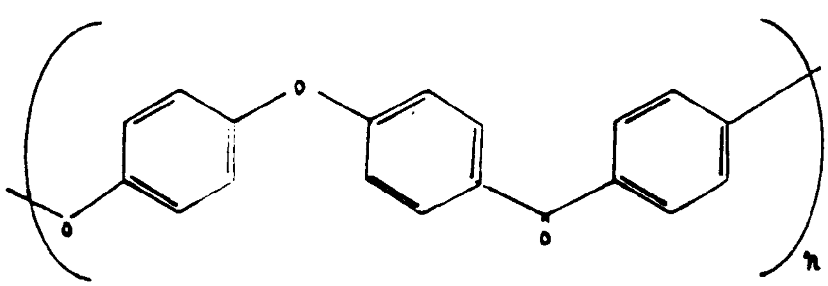 I

PEK 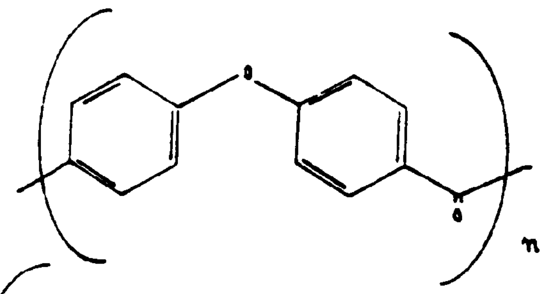 II

PEKK 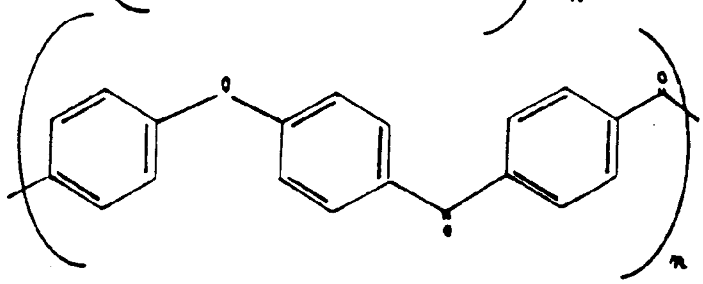 III

PEEKEK

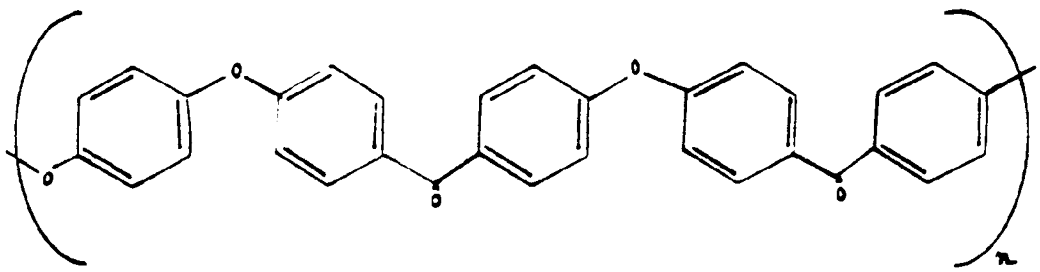 IV

PEDEK 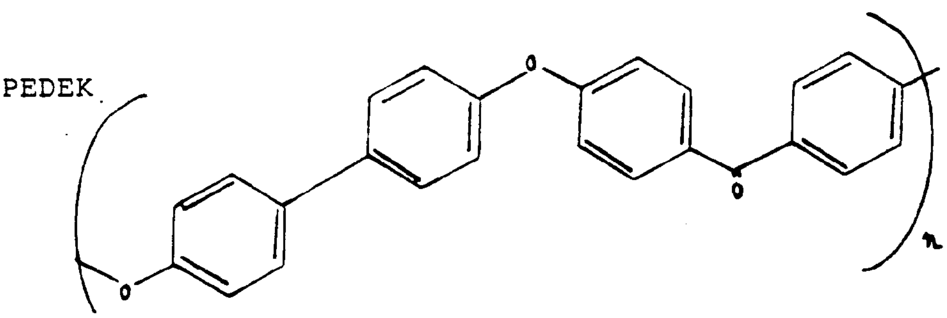 V

Whereas the polymer is preferably a homopolymer, e.g. PEEK or PEK, we do not exclude the possibility that it may be a copolymer e.g. PEEK/PEK, PEEK/PES, PEK/PES, PEEK/PEES, wherein the copolymer units are represented by the following formulae:

PES 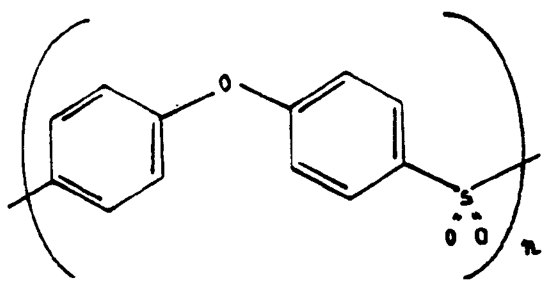 VI

PEES 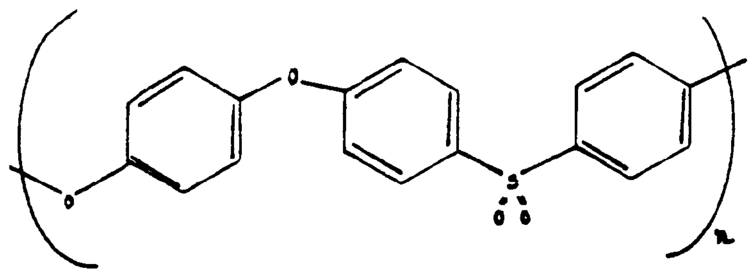 VII

Each such polymer type is hereinafter referred to for convenience by the trivial name appended hereinbefore thereto.

Alternatively the membrane may be made of polypropylene (using, for example, a polyurethane as the immiscible polymer) or nylon (using, for example, polypropylene as the immiscible polymer) or a polymer based on a thioketone.

We have also found that the membrane of the present invention has unexpectedly good properties, in particular a high filtration permeate rate and efficiency.

Accordingly in a further aspect the present invention provides a filtration process using a membrane of the present invention.

The method of the invention as used to produce a tubular structure will now be described by way of example and with reference to the accompanying drawings in which:

Fig 1 shows a vertical section through a portion of one apparatus used,

Fig 2 shows in more detail the area circled in Fig 1, and

Fig 3 shows a horizontal section through the fine gauze depicted in Figs 1 and 2.

The apparatus which is shown in Figs 1, 2 and 3 comprises a bridge plate 1 and a die plate 2. Passing through the bridge plate is a right angled conduit 3 (vertical leg shown) through which an inert gas can be supplied centrally of the die 4 and conduits 5 through which a polymer blend after leaving the sand pack (not shown) passes to the outside of the die 4. Before entering the die, the polymer blend is retained temporarily in a chamber 6. In the chamber is located a fine gauze 7 through which polymer blend passes a before entering the die. If desired (but not the shown) the fine gauze can be supported in a suitable manner for example by means of a stronger, more open, gauze. In the following examples, which are concerned with the production of a tubular structure, a small screw extruder having a 22mm diameter screw and length to diameter ratio of 22 to 1 was used in conjunction with a standard sand pack and annular die. The die used in Example 2 below had an inner dimension of 2.2 mm and annular gap of 5 mm. More details of the die, die plate and bridge plate are to be found in Figs 1, 2 and 3.

Example 1

A blend of PEEK 450G and PES 3600G (50/50 w/w) was extruded at 9 g/min and at a temperature of 370-390 degrees C through an annular die having a gap of 180 μm and an inner diameter of 2.2mm to form a tube. The tube was quenched using a conventional air quench A nitrogen gas feed was applied to the inside of the annular die at a rate commensurate with the production of a uniform product. The tube was leached in dimethyl formamide at room temperature, washed in deionised water and dried. It was found that the tube had lost 49 % of its pre-leached weight ie 98% of the PES phase had been removed. The tube was found to be permeable both to air and water.

Example 2

A blend of PEEK 450G and PES 3600G (50/50 w/w) was extruded at 20 g/min through an annular die at a temperature of 370-390°C to form a tube. The die had an inner dimension of 2.2mm and a gap of 3.9mm. Placed within the die was a fine gauze with a "200" mesh size rating ie wire diameter of 120 μm and average spacings between wires of 74 μm. This fine gauze was supported underneath by a coarser gauze with a "50" mesh size rating ie a wire diameter of 180 microns and average spacings between wires of 300 μm. A nitrogen gas feed was applied to the inside of the annular die at a rate commensurate with the production of a uniform product. The tube was quenched using a conventional air quench. The tube was leached in dimethyl formamide at room temperature, washed with deionised water and then dried. It was found that the tube had lost 48% of its pre-leached weight ie 96% of the PES phase had been removed. The tubes were found to be highly porous and had high water and air fluxes.

Example 3 - Comparison Example

Samples of tube from Example 1 and from Example 2 were each sealed at one end using proprietary epoxy resin from Ciba Geigy. The open end was connected up to a pure water supply and variable speed pump such that a positive pressure of water could be applied to the lumen. The trans-membrane pressure was increased until the membranes ruptured.

For comparison, samples of polypropylene (Enka) and polysulphone (Amicon) hollow fibres were also tested using the same procedure. Table 1 gives the results of the burst pressure test.

Table 1

| Sample | Burst Pressure (Bars) |
|---|---|
| Example 1 | 1-2 |
| Example 2 | >30 |
| Amicon hollow fibre | 8.6 |
| Enka hollow fibre | 13 |
| Enka hollow fibre | 13 |
| Enka hollow fibre | 13 |
| Enka hollow fibre | 16 |

Example 4 - Comparison Example

A 1% wt/wt dispersion of "bakers yeast" in deionised water was used as a challenge solution for a commercial Ceramic membrane (Millipore Ceraflo) with a pore size rating of 1 micrometer. The membrane was set up in a cross-flow configuration, with the feed passing along the inner channels of the tube before returning to the feed tank. The pump and control values were arranged to achieve cross-flow conditions with a tangential feed velocity (along the feed channels) of approximately 1 meter per second and a trans-membrane pressure of 1.65 bar. Permeate was collected and the rate of flow determined with time. The permeate was continuously returned to the feed tank in order to ensure a stable yeast concentration. The rate of permeate production with time was plotted.

The same yeast challenge was applied to the lumen of a tubular membrane of Example 2. The cross-flow conditions were set up as for the comparative example, ie a tangential velocity of 1 meter per second and a trans-membrane pressure of 1.65 bar. The return feed and permeate were returned to the feed tank to ensure a stable yeast concentration. The permeate was collected over a similar time period to the ceramic membrane. The rate of permeate production with time was plotted.

The permeate rate for this membrane was found to level out at approximately 10 times that of the Millpore Ceraflo Ceramic membrane. Further, the permeate was found to be clear while that from the ceramic was found to be turbid. Not only does the membrane have a higher flux than the ceramic but the amount of challenge retained is also higher.

## Claims

1. A porous thermoplastic membrane structure having, in the absence of an external skin, a generally uniform porosity, such membrane structure being capable of withstanding a minimum burst pressure in excess of 5 bars.

2. A structure according to claim 1, capable of withstanding a minimum burst pressure in excess of 8 bars.

3. A structure according to claim 1, which comprises a thermoplastic polymer network.

4. A structure according to claim 3, in which the thermoplastic polymer is a homopolymer of any one of formulae (I) to (VII).

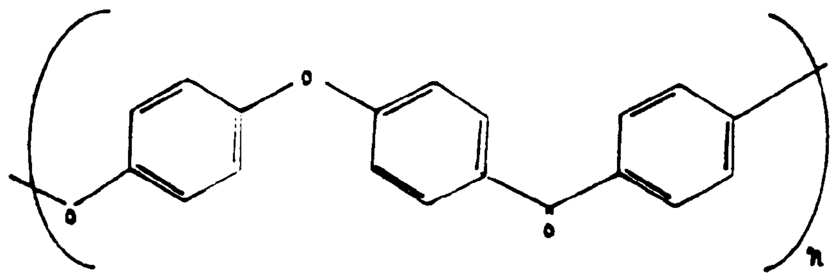

(I)

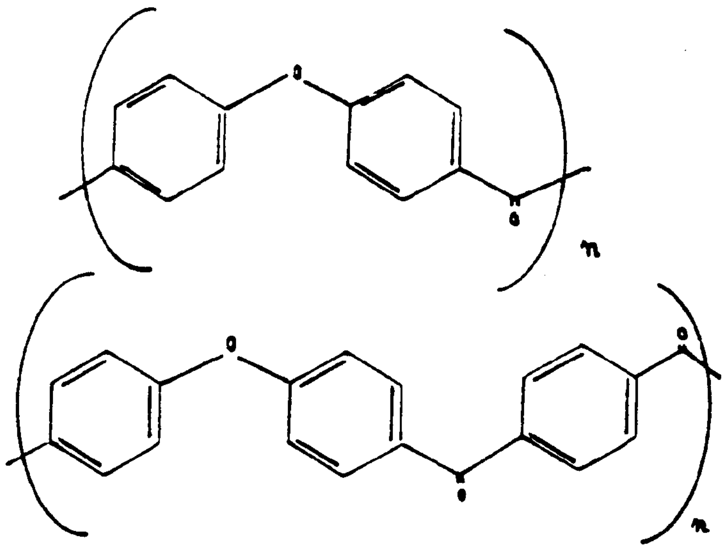

II

III

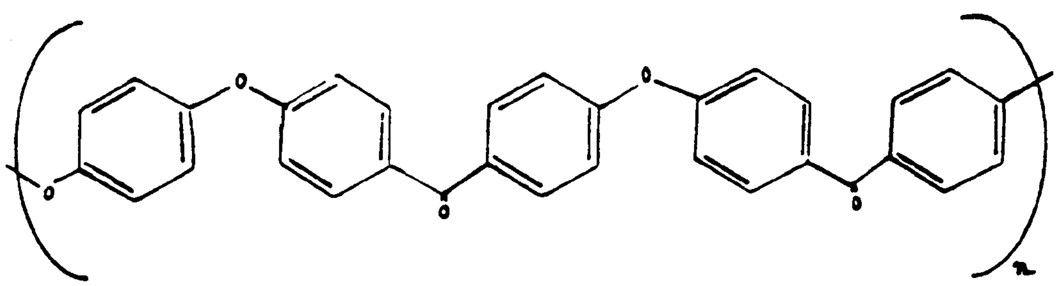

(IV)

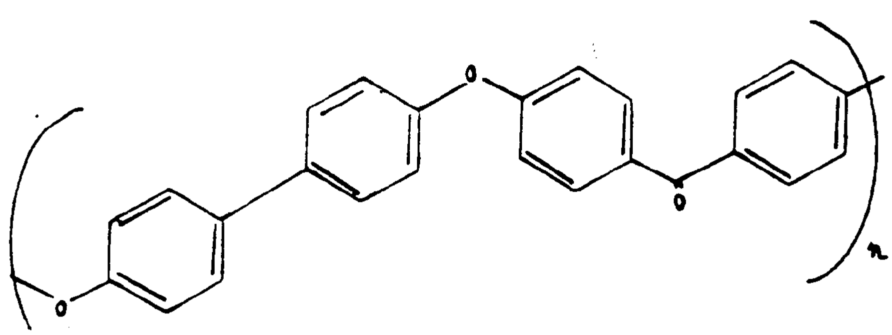

(V)

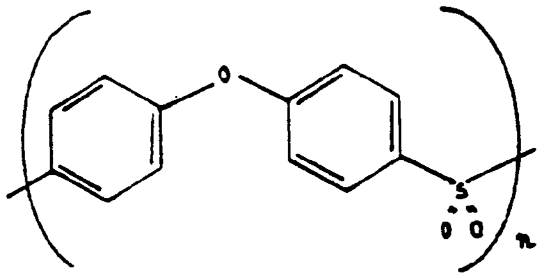

(VI)

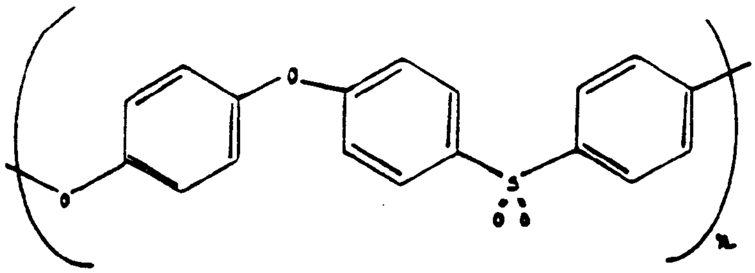

(VII)

5. A structure according to claim 3, in which the thermoplastic polymer is a homopolymer of formula (I), as defined in claim 4.

6. A structure according to claim 3, in which the thermoplastic polymer is a homopolymer of formula (II), as defined in claim 4.

7. A structure according to claim 3, in which the thermoplastic polymer is a copolymer comprising the monomer units shown in any one of formula (I) to (VII), as defined in claim 4.

8. A structure according to claim 1, which is extruded.

9. A method of producing a structure according to claim 1 in which a blend of a first thermoplastic polymer and a second thermoplastic polymer immiscible therewith is extruded through a die, characterised in that a fine gauze is interposed in the flow path of the blend before it enters the die.

10. A method according to claim 1, wherein the fine gauze is a laminar structure with a % area of perforations corresponding to a perforated structure of 80 to 500 mesh.

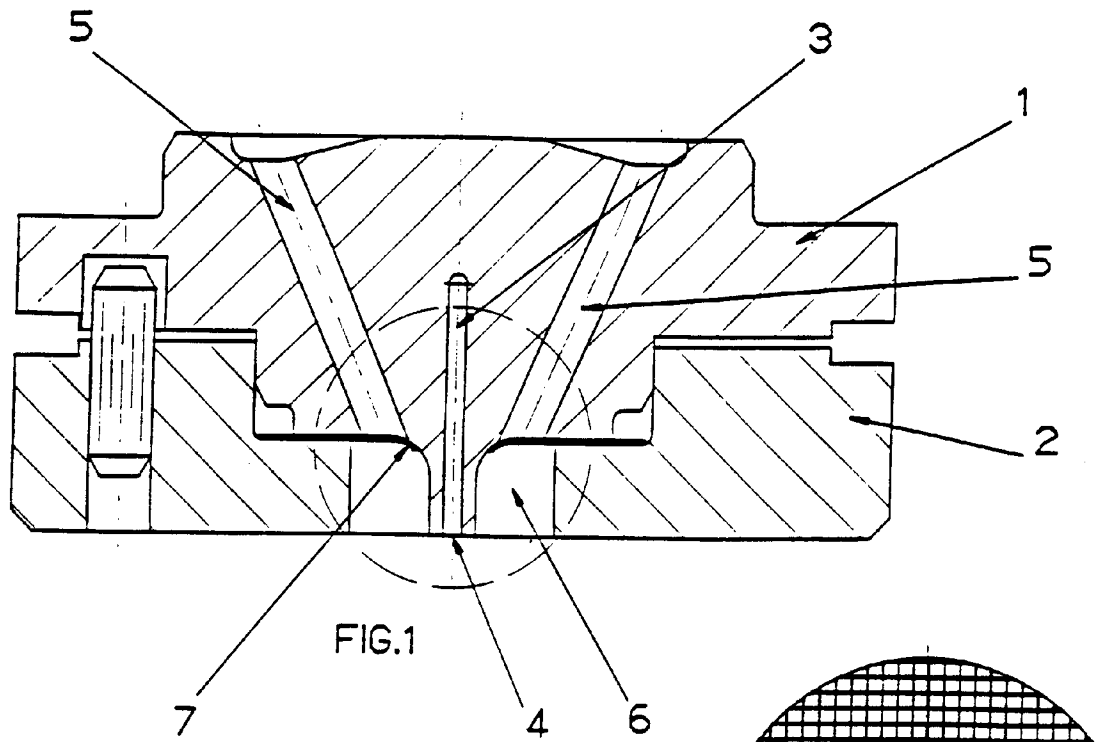

FIG.1

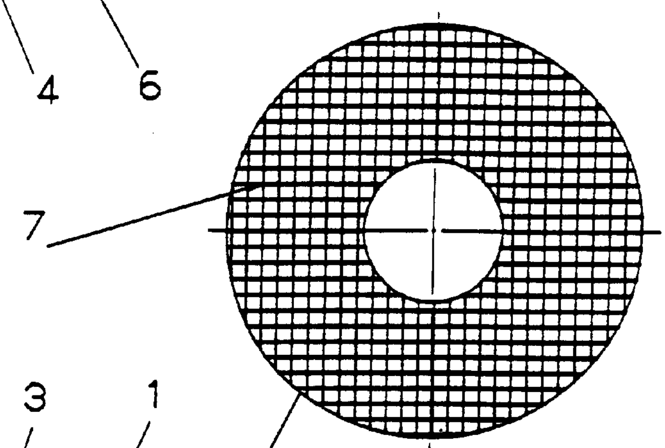

FIG.3

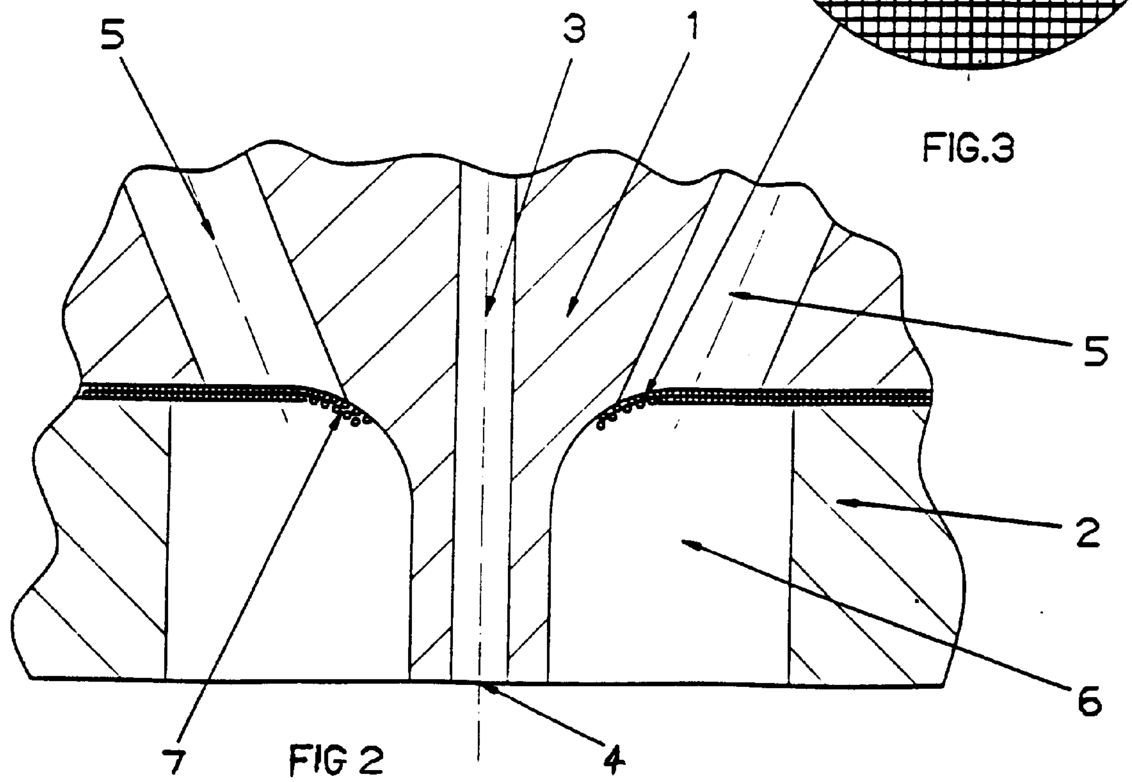

FIG 2